# EUROPEAN PATENT APPLICATION

(11) **EP 4 579 163 A1**
(43) Date of publication of application: **02.07.2025**
(21) Application number: 23882315.7
(22) Date of filing: 27.09.2023
(51) Int. Cl.: F25J 1/00, B01D 53/62, B01D 53/78, B01D 53/82, B01D 53/96, C01B 32/50

(54) **CARBON DIOXIDE RECOVERY SYSTEM AND CARBON DIOXIDE RECOVERY METHOD**

(30) Priority: 26.10.2022 JP 2022171434
(71) Applicant: Mitsubishi Heavy Industries, Ltd., Tokyo 100-8332 (JP)
(72) Inventor: TANAKA, Toshimitsu, Tokyo 100-8332 (JP); NAKAMICHI, Kenji, Tokyo 100-8332 (JP)
(74) Representative: Studio Torta S.p.A.
(86) International application number: PCT/JP2023/035086
(87) International publication number: WO 2024/090105

(57) **Abstract**

A carbon dioxide recovery system is provided with: a carbon dioxide extraction device configured to cause carbon dioxide contained in exhaust gas discharged from a combustion device to be attached to an absorption solution or an adsorbent; a separation device including a heater configured to heat the absorption solution or the adsorbent by heat exchange with a heat transfer medium and configured to separate carbon dioxide gas from the absorption solution or the adsorbent; and a liquefaction device configured to liquefy the carbon dioxide gas. The liquefaction device includes: a compressor configured to compress the carbon dioxide gas; a heat exchanger configured to perform heat exchange between the heat transfer medium to be introduced into the heater and the carbon dioxide gas compressed; a cooler configured to cool the carbon dioxide gas by heat exchange between the carbon dioxide gas compressed and a first cooling medium; and a liquefier configured to liquefy the carbon dioxide gas by heat exchange between the carbon dioxide gas that has passed through the heat exchanger and the cooler and a second cooling medium.

## Description

### TECHNICAL FIELD

The present disclosure relates to a carbon dioxide recovery system and a carbon dioxide recovery method for recovering carbon dioxide contained in exhaust gas discharged from a combustion device.

The present application claims priority based on Japanese Patent Application No. 2022-171434 filed on October 26, 2022, the entire content of which is incorporated herein by reference.

### BACKGROUND ART

Carbon dioxide contained in exhaust gas discharged from a combustion device is conventionally absorbed into a liquid absorption solution, such as amines, or adsorbed onto an adsorbent to separate carbon dioxide gas from the exhaust gas (see Patent Document 1, for example). Since carbon dioxide recovered from the exhaust gas is in a gaseous state, liquefaction and densification of carbon dioxide are necessary to efficiently transport carbon dioxide to remote collection points.

### Citation List

### Patent Literature

Patent Document 1: JP2635536B

### SUMMARY

### Problems to be Solved

To recover carbon dioxide from exhaust gas and liquefy it, both a facility for supplying a heating source to separate carbon dioxide gas from the exhaust gas and a facility for supplying a cooling source to liquefy carbon dioxide are required. The burden of installing both facilities is likely to be too great for small businesses. To reduce this burden, it is desirable to reduce the size and complexity of facilities for recovering carbon dioxide contained in exhaust gas.

In view of the above, an object of at least one embodiment of the present disclosure is to provide a carbon dioxide recovery system and a carbon dioxide recovery method capable of reducing the size and complexity of facilities for recovering carbon dioxide contained in exhaust gas.

### Solution to the Problems

A carbon dioxide recovery system according to at least one embodiment of the present disclosure is a carbon dioxide recovery system configured to recover carbon dioxide contained in exhaust gas discharged from a combustion device, comprising: a carbon dioxide extraction device configured to absorb carbon dioxide contained in the exhaust gas into an absorption solution or to adsorb the carbon dioxide onto an adsorbent; a separation device configured to separate carbon dioxide gas from the absorption solution or the adsorbent by heating the absorption solution or the adsorbent to which the carbon dioxide is attached in the carbon dioxide extraction device, the separation device including a heater configured to heat the absorption solution or the adsorbent by heat exchange between the absorption solution or the adsorbent and a heat transfer medium; and a liquefaction device configured to liquefy the carbon dioxide gas by cooling the carbon dioxide gas separated from the absorption solution or the adsorbent in the separation device. The liquefaction device includes: at least one compressor configured to compress the carbon dioxide gas separated from the absorption solution or the adsorbent in the separation device; at least one heat exchanger configured to perform heat exchange between the heat transfer medium to be introduced into the heater and the carbon dioxide gas compressed in the at least one compressor; at least one cooler configured to cool the carbon dioxide gas by heat exchange between the carbon dioxide gas compressed in the at least one compressor and a first cooling medium; and a liquefier configured to liquefy the carbon dioxide gas by heat exchange between the carbon dioxide gas that has passed through the at least one heat exchanger and the at least one cooler and a second cooling medium.

A carbon dioxide recovery method according to at least one embodiment of the present disclosure is a carbon dioxide recovery method for recovering carbon dioxide contained in exhaust gas discharged from a combustion device, comprising: a carbon dioxide extraction step of absorbing carbon dioxide contained in the exhaust gas into an absorption solution or adsorbing the carbon dioxide onto an adsorbent; a separation step of separating carbon dioxide gas from the absorption solution or the adsorbent by heating the absorption solution or the adsorbent by heat exchange between the absorption solution or the adsorbent and a heat transfer medium; and a liquefaction step of liquefying the carbon dioxide gas by cooling the carbon dioxide gas separated from the absorption solution or the adsorbent in the separation step. The liquefaction step includes: a compression step of compressing the carbon dioxide gas separated from the absorption solution or the adsorbent in the separation step; a heat exchange step of performing heat exchange between the heat transfer medium before the heat exchange in the separation step and the carbon dioxide gas compressed in the compression step; a cooling step of cooling the carbon dioxide gas by heat exchange between the carbon dioxide gas compressed in the compression step and a first cooling medium; and a liquefaction step of liquefying the carbon dioxide gas by heat exchange between the carbon dioxide gas subjected to the heat exchange with the heat transfer medium in the heat exchange step and cooled in the cooling step and a second cooling medium.

### Advantageous Effects

At least one embodiment of the present disclosure provides a carbon dioxide recovery system and a carbon dioxide recovery method capable of reducing the size and complexity of facilities for recovering carbon dioxide contained in exhaust gas.

### BRIEF DESCRIPTION OF DRAWINGS

FIG. 1 is a diagram schematically showing a carbon dioxide recovery system according to an embodiment of the present disclosure.
FIG. 2 is a diagram schematically showing a carbon dioxide recovery system according to an embodiment of the present disclosure.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

### (Carbon dioxide recovery system)

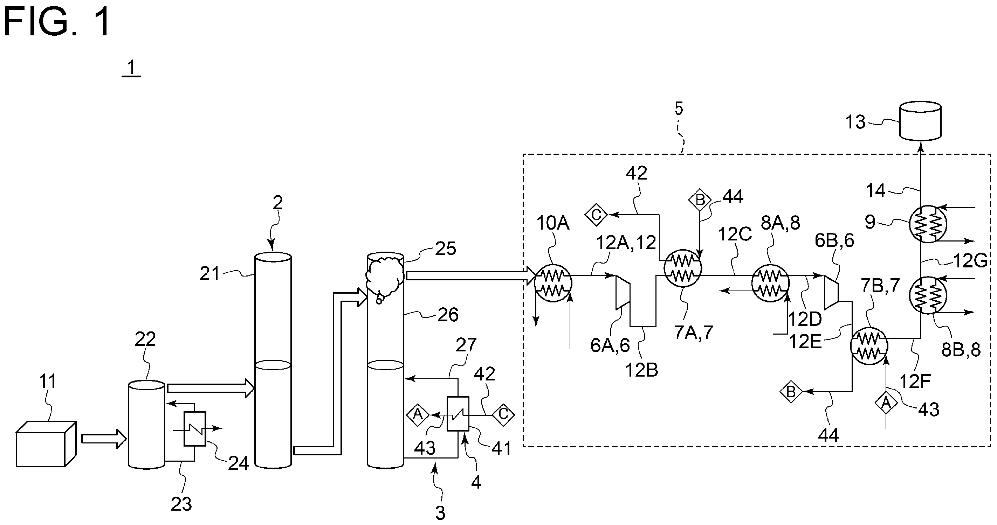

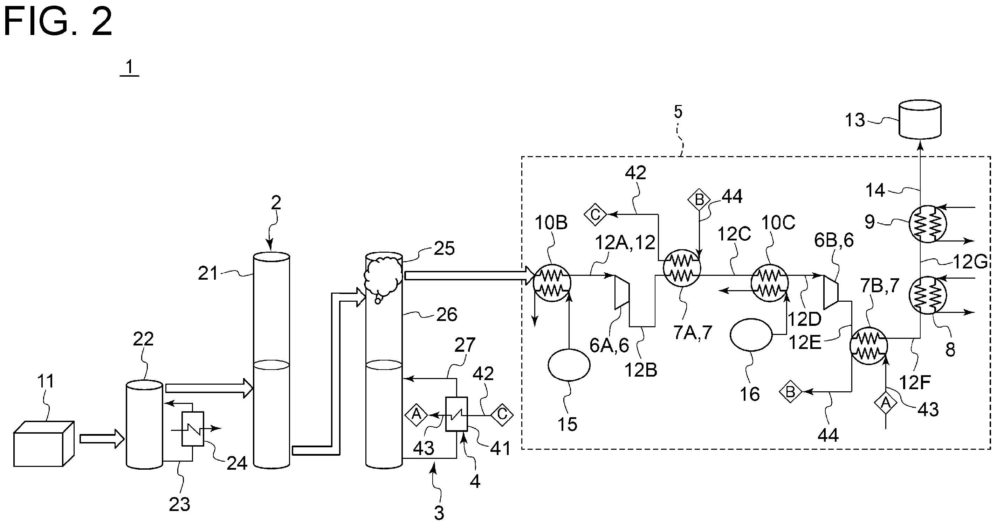

FIGs. 1 and 2 are diagrams schematically showing a carbon dioxide recovery system 1 according to an embodiment of the present disclosure. The carbon dioxide recovery system 1 according to some embodiments of the present disclosure is configured to recover carbon dioxide contained in exhaust gas discharged from a combustion device 11, such as engines. The carbon dioxide recovery system 1 is configured to liquefy carbon dioxide gas recovered from the exhaust gas for efficient storage and transportation. As shown in FIGs. 1 and 2, the carbon dioxide recovery system 1 is provided with a carbon dioxide extraction device 2, a separation device 3 including a heater 4, and a liquefaction device 5.

### (Carbon dioxide extraction device)

The carbon dioxide extraction device 2 is configured to absorb carbon dioxide contained in exhaust gas discharged from the combustion device 11 into an absorption solution or to adsorb carbon dioxide contained in the exhaust gas onto an adsorbent. In the embodiments shown in FIGs. 1 and 2, the carbon dioxide extraction device 2 is configured to absorb carbon dioxide contained in the exhaust gas into a liquid absorption solution. Examples of the absorption solution include liquid amines. The absorption solution can be any liquid that can absorb carbon dioxide and is not limited to liquid amines.

In the embodiments shown in FIGs. 1 and 2, the carbon dioxide extraction device 2 includes an absorption tower 21 configured to bring the exhaust gas discharged from the combustion device 11 into gas-liquid contact with the absorption solution. In the absorption tower 21, the absorption solution is sprayed within the absorption tower 21 to bring the exhaust gas introduced into the absorption tower 21 into gas-liquid contact with the absorption solution, so that carbon dioxide contained in the exhaust gas is absorbed into the absorption solution.

In the embodiments shown in FIGs. 1 and 2, the carbon dioxide recovery system 1 is further provided with a cooling tower 22 and a regeneration tower 25. The cooling tower 22 is equipped with a cooling water circulation line 23 for extracting cooling water stored in the cooling tower 22 from the cooling tower 22 and spraying it into the cooling tower 22, and a cooling water cooler 24 for cooling the cooling water flowing through the cooling water circulation line 23 by a cooling medium.

The exhaust gas discharged from the combustion device 11 is introduced into the cooling tower 22. In the cooling tower 22, the exhaust gas is cooled to about room temperature by gas-liquid contact between the exhaust gas introduced into the cooling tower 22 and the cooling water sprayed into the cooling tower 22 through the cooling water circulation line 23. The exhaust gas cooled in the cooling tower 22 is led to the absorption tower 21. The absorption solution that has absorbed carbon dioxide in the absorption tower 21 is led to the regeneration tower 25 and stored in the regeneration tower 25.

### (Separation device)

The separation device 3 is configured to separate carbon dioxide gas from the absorption solution or the adsorbent by heating the absorption solution or the adsorbent to which carbon dioxide is attached in the carbon dioxide extraction device 2. The separation device 3 includes a heater 4 configured to heat the absorption solution or the adsorbent by heat exchange between the absorption solution or the adsorbent and a heat transfer medium.

In the embodiments shown in FIGs. 1 and 2, the separation device 3 is designed to separate carbon dioxide gas from the absorption solution by heating the absorption solution to which carbon dioxide is attached with a heater 4 configured to heat the absorption solution by heat exchange between the absorption solution and a heat transfer medium hotter than the absorption solution. In the embodiments shown in FIGs. 1 and 2, the carbon dioxide gas is separated from the absorption solution by heating the absorption solution stored in the regeneration tower 25 by the thermal energy of the heat transfer medium introduced into the heater 4. By heating the absorption solution above a predetermined temperature (e.g. 140°C), the carbon dioxide gas absorbed in the absorption solution is separated. The separation of carbon dioxide gas in the separation device 3 restores the carbon dioxide absorption performance of the absorption solution.

### (Liquefaction device)

The liquefaction device 5 is configured to liquefy the carbon dioxide gas by cooling the carbon dioxide gas separated from the absorption solution or the adsorbent in the separation device 3. As shown in FIGs. 1 and 2, the liquefaction device 5 includes at least one compressor 6, at least one heat exchanger 7, at least one cooler 8, and a liquefier 9.

In the embodiments shown in FIGs. 1 and 2, the carbon dioxide recovery system 1 is further provided with a storage tank 13 configured to store carbon dioxide in a liquid state (liquid carbon dioxide) liquefied in the liquefier 9. The liquefaction device 5 further includes a carbon dioxide gas line 12 for sending the carbon dioxide gas separated from the absorption solution or the adsorbent in the regeneration tower 25 (separation device 3) to the liquefier 9, and a liquid carbon dioxide line 14 for sending the liquid carbon dioxide liquefied in the liquefier 9 to the storage tank 13. The at least one compressor 6, the at least one heat exchanger 7, and the at least one cooler 8 are installed on the carbon dioxide gas line 12. By driving the compressor 6 on the carbon dioxide gas line 12, the carbon dioxide gas is drawn from the regeneration tower 25 (separation device 3) to the carbon dioxide gas line 12 and led to the compressor 6. The carbon dioxide gas compressed in the compressor 6 is then sent by the drive of the compressor 6 through the carbon dioxide gas line 12 toward the liquefier 9, and after liquefying in the liquefier 9, is led to the storage tank 13 through the liquid carbon dioxide line 14 and stored in the storage tank 13.

### (Compressor)

The at least one compressor 6 is configured to compress the carbon dioxide gas. By driving the compressor 6, the carbon dioxide gas drawn to the compressor 6 from upstream of the compressor 6 on the carbon dioxide gas line 12 is compressed. The carbon dioxide gas compressed in the compressor 6 is heated and pressurized compared to before being introduced to the compressor 6 and becomes a high temperature and pressure gas.

### (Heat exchanger, Heater)

The at least one heat exchanger 7 is configured to perform heat exchange between the heat transfer medium to be introduced into the heater 4 and the carbon dioxide gas compressed in the compressor 6. The carbon dioxide gas compressed in the compressor 6 is hotter than the heat transfer medium before it is introduced into the heater 4. The heat exchange in the heat exchanger 7 cools the carbon dioxide gas flowing through the carbon dioxide gas line 12 and heats the heat transfer medium to be introduced into the heater 4. In other words, the heat exchanger 7 transfers the exhaust heat (thermal energy) of the carbon dioxide gas compressed in the compressor 6 to the heat transfer medium before it is introduced into the heater 4 to heat the heat transfer medium.

The heat transfer medium heated in the heat exchanger 7 is introduced into the heater 4. In the embodiments shown in FIGs. 1 and 2, the regeneration tower 25 is equipped with a regeneration tower body 26 configured to store the absorption solution, and an absorption solution circulation line 27 for extracting the absorption solution stored in the regeneration tower body 26 and then returning it to the regeneration tower body 26. The carbon dioxide recovery system 1 is further provided with a heat transfer medium introduction line 42 for sending the heat transfer medium heated in the heat exchanger 7 to the heater 4. The heater 4 includes a heat exchanger 41 configured to exchange heat between the absorption solution flowing through the absorption solution circulation line 27 and the heat transfer medium introduced into the heater (heat exchanger 41) through the heat transfer medium introduction line 42.

The heat exchange in the heat exchanger 41 heats the absorption solution flowing through the absorption solution circulation line 27 and cools the heat transfer medium introduced into the heat exchanger 41. The absorption solution heated in the heat exchanger 41 is led to the regeneration tower body 26 through the absorption solution circulation line 27 to heat the absorption solution within the regeneration tower body 26. When the absorption solution is heated above a predetermined temperature in the regeneration tower body 26 or the absorption solution circulation line 27, carbon dioxide absorbed in the absorption solution is separated.

### (Cooler)

The at least one cooler 8 is configured to cool the carbon dioxide gas by heat exchange between the carbon dioxide gas compressed in the at least one compressor 6 and a first cooling medium. The first cooling medium introduced into the cooler 8 is colder (e.g., between 0°C and 20°C) than the carbon dioxide gas introduced into the cooler 8. Examples of the first cooling medium include cooling liquid such as water. However, the first cooling medium may be a heat transfer medium other than water. The first cooling medium is introduced into the cooler 8 by a pump (not shown).

Through the heat exchange in the cooler 8, the carbon dioxide gas flowing through the carbon dioxide gas line 12 toward the liquefier 9 is cooled by the first cooling medium. After pressurized in the compressor 6, the carbon dioxide gas cooled by the heat exchanger 7 and the cooler 8 is introduced into the liquefier 9 through the carbon dioxide gas line 12.

### (Liquefier)

The liquefier 9 is configured to liquefy the carbon dioxide gas by heat exchange between the carbon dioxide gas that has passed through the at least one heat exchanger 7 and the at least one cooler 8 and a second cooling medium. The second cooling medium introduced into the liquefier 9 is colder (e.g., between -40°C and -20°C) than the first cooling medium introduced into the cooler 8. Examples of the second cooling medium include cooling liquid such as water. However, the second cooling medium may be a heat transfer medium other than water. The second cooling medium is introduced into the liquefier 9 by a pump (not shown). Through the heat exchange in the liquefier 9, the carbon dioxide gas introduced through the carbon dioxide gas line 12 into the liquefier 9 is cooled by the second cooling medium.

As shown in FIGs. 1 and 2, the carbon dioxide recovery system 1 according to some embodiments is provided with the carbon dioxide extraction device 2, the separation device 3 including the heater 4, and the liquefaction device 5, and the liquefaction device 5 includes the at least one compressor 6, the at least one heat exchanger 7, the at least one cooler 8, and the liquefier 9.

With the above configuration, the at least one compressor 6 pressurizes the carbon dioxide gas, thereby raising the liquefaction temperature of the carbon dioxide gas. Further, the at least one heat exchanger 7 and the at least one cooler 8 lower the temperature of the carbon dioxide gas introduced into the liquefier 9 in advance, allowing a relatively high temperature of the second cooling medium used for heat exchange in the liquefier 9. In this case, the size of a facility for cooling the second cooling medium can be reduced.

Additionally, with the above configuration, the carbon dioxide gas can be separated from the absorption solution or the adsorbent by using the thermal energy of the carbon dioxide gas compressed in the at least one compressor 6 as a heating source in the separation device 3. In this case, the exhaust heat from the compressor 6 is used to reduce the load on a boiler facility for supplying the heating source to the separation device 3 or to eliminate the boiler facility. Therefore, with the above configuration, it is possible to reduce the size and complexity of the carbon dioxide recovery system 1, which is a facility for recovering carbon dioxide contained in the exhaust gas.

In some embodiments, as shown in FIGs. 1 and 2, the carbon dioxide extraction device 2 is configured to absorb carbon dioxide contained in the exhaust gas into a liquid absorption solution. In this case, carbon dioxide absorbed in the liquid absorption solution in the carbon dioxide extraction device 2 can be separated from the absorption solution by the separation device 3, and the carbon dioxide gas separated from the absorption solution can be liquefied by the liquefaction device 5.

In some embodiments, as shown in FIGs. 1 and 2, the at least one compressor 6 includes a first compressor 6A, and a second compressor 6B disposed downstream (liquefier 9 side) of the first compressor 6A on the carbon dioxide gas line 12.

With the above configuration, by providing a multi-stage compressor (first compressor 6A, second compressor 6B) on the carbon dioxide gas line 12, the output of the compressors 6A and 6B that make up each stage can be reduced, so that the size of the compressors 6A and 6B that make up each stage can be reduced.

In some embodiments, as shown in FIGs. 1 and 2, the at least one heat exchanger 7 includes a first heat exchanger 7A disposed between the first compressor 6A and the second compressor 6B on the carbon dioxide gas line 12, and a second heat exchanger 7B disposed downstream of the second compressor 6B on the carbon dioxide gas line 12.

In the embodiments shown in FIGs. 1 and 2, the liquefaction device 5 further includes a heat transfer medium return line 43 for sending a heat transfer medium (heating medium) from the heat exchanger 41 of the heater 4 to the second heat exchanger 7B, and a heat transfer medium supply line 44 for sending the heat transfer medium (heating medium) from the second heat exchanger 7B to the first heat exchanger 7A. A pump is provided on any of the heat transfer medium introduction line 42, the heat transfer medium return line 43, or the heat transfer medium supply line 44 to send the heat transfer medium. The heat transfer medium circulates through the heat transfer medium introduction line 42, the heat exchanger 41, the heat transfer medium return line 43, the second heat exchanger 7B, the heat transfer medium supply line 44, and the first heat exchanger 7A in that order. Examples of the heat transfer medium (heating medium) introduced into the heat exchanger 41 include water (vaporized water vapor). However, the heat transfer medium (heating medium) introduced into the heat exchanger 41 may be a heat transfer medium other than water.

In the embodiment shown in FIG. 1, the at least one cooler 8 includes a first cooler 8A disposed between the first heat exchanger 7A and the second compressor 6B on the carbon dioxide gas line 12, and a second cooler 8B disposed downstream of the second heat exchanger 7B on the carbon dioxide gas line 12. The carbon dioxide gas line 12 includes a pipe 12A connecting the regeneration tower 25 to the first compressor 6A, a pipe 12B connecting the first compressor 6A to the first heat exchanger 7A, a pipe 12C connecting the first heat exchanger 7A to the first cooler 8A, a pipe 12D connecting the first cooler 8A to the second compressor 6B, a pipe 12E connecting the second compressor 6B to the second heat exchanger 7B, a pipe 12F connecting the second heat exchanger 7B to the second cooler 8B, and a pipe 12G connecting the second cooler 8B to the liquefier 9.

With the above configuration, the first heat exchanger 7A allows the thermal energy of the carbon dioxide gas compressed in the first compressor 6A to be supplied to the separation device 3 as a heating source. Further, the second heat exchanger 7B allows the thermal energy of the carbon dioxide gas compressed in the second compressor 6B to be supplied to the separation device 3 as a heating source. In this case, the exhaust heat from the compressors 6A and 6B, which make up each stage of the multi-stage compressor, can be effectively used as a heating source for the separation device 3.

In some embodiments, as shown in FIG. 1, the liquefaction device 5 may further include a pre-cooler 10A configured to cool the carbon dioxide gas by heat exchange between the carbon dioxide gas to be introduced into the first heat exchanger 7A and a cooling medium. The cooling medium introduced into the pre-cooler 10A is colder (e.g., between 0°C and 20°C) than the carbon dioxide gas introduced into the pre-cooler 10A. Examples of the cooling medium introduced into the pre-cooler 10A include cooling liquid such as water. However, the cooling medium introduced into the pre-cooler 10A may be a heat transfer medium other than water. The cooling medium is introduced into the pre-cooler 10A by a pump (not shown). In this case, the pre-cooler 10A cools the carbon dioxide gas to be introduced into the first heat exchanger 7A, thereby adjusting the amount of heat supplied to the separation device 3 via the at least one heat exchanger 7.

In some embodiments, as shown in FIG. 2, the liquefaction device 5 may further include at least one pre-heater 10B, 10C configured to heat the carbon dioxide gas by heat exchange between the carbon dioxide gas to be introduced into the at least one compressor 6 and a first heating medium.

In the embodiment shown in FIG. 2, the at least one pre-heater 10B, 10C includes a first pre-heater 10B disposed on the pipe 12A connecting the regeneration tower 25 to the first compressor 6A and a second pre-heater 10C disposed between the pipes 12C and 12D, instead of the first cooler 8A. To each of the first pre-heater 10B and the second pre-heater 10C, for example, a first heating medium at a temperature (e.g., between 60°C and 80°C) higher than room temperature is introduced from supply sources 15, 16 of unused exhaust heat in the carbon dioxide recovery system 1. The first heating medium may be hot air or exhaust gas.

With the above configuration, the at least one pre-heater 10B, 10C heats the carbon dioxide gas to be introduced into the at least one compressor 6, thereby increasing the amount of heat supplied to the separation device 3 via the at least one heat exchanger 7.

In some embodiments described above, carbon dioxide contained in the exhaust gas is extracted by absorbing it into the liquid absorption solution, but carbon dioxide may be extracted by adsorbing in onto a solid adsorbent.

### (Carbon dioxide extraction device)

The carbon dioxide extraction device 2 may be configured to adsorb carbon dioxide contained in exhaust gas discharged from the combustion device 11 onto a solid adsorbent. The separation device 3 may include a heater 4 configured to heat the adsorbent and may be configured to separate carbon dioxide gas from the adsorbent by heating the adsorbent to which carbon dioxide is attached in the carbon dioxide extraction device 2 with the heater 4. The liquefaction device 5 may be configured to liquefy the carbon dioxide gas by cooling the carbon dioxide gas separated from the adsorbent in the separation device 3. In this case, carbon dioxide adsorbed on the solid adsorbent in the carbon dioxide extraction device 2 can be separated from the adsorbent by the separation device 3 including the heater 4, and the carbon dioxide gas separated from the adsorbent can be liquefied by the liquefaction device 5.

The carbon dioxide extraction device 2 may have a casing that contains the adsorbent and may be configured to adsorb the exhaust gas discharged from the combustion device 11 onto the adsorbent. The adsorbent is configured to adsorb or separate carbon dioxide onto/from the adsorbent by either temperature swing or pressure swing. Examples of the adsorbent include a solid adsorbent such as zeolite. The adsorbent can be any solid that can adsorb carbon dioxide and is not limited to zeolite.

The carbon dioxide recovery method according to some embodiments is a method for recovering carbon dioxide contained in exhaust gas discharged from the combustion device 11. The carbon dioxide recovery method includes a carbon dioxide extraction step, a separation step, and a liquefaction step. Some steps in the carbon dioxide recovery method may be performed by devices constituting the carbon dioxide recovery system 1 or devices not constituting the carbon dioxide recovery system 1 or manually.

In the carbon dioxide extraction step, carbon dioxide contained in exhaust gas discharged from the combustion device 11 is absorbed into an absorption solution, or the carbon dioxide is adsorbed onto an adsorbent. In the separation step, carbon dioxide gas is separated from the absorption solution or the adsorbent by heating the absorption solution or the adsorbent by heat exchange between the absorption solution or the adsorbent and a heat transfer medium. In the liquefaction step, the carbon dioxide gas is liquefied by cooling the carbon dioxide gas separated from the absorption solution or the adsorbent in the separation step.

The liquefaction step includes: a compression step of compressing the carbon dioxide gas separated from the absorption solution or the adsorbent in the separation step; a heat exchange step of performing heat exchange between the heat transfer medium before the heat exchange in the separation step and the carbon dioxide gas compressed in the compression step; a cooling step of cooling the carbon dioxide gas by heat exchange between the carbon dioxide gas compressed in the compression step and a first cooling medium; and a liquefaction step of liquefying the carbon dioxide gas by heat exchange between the carbon dioxide gas subjected to the heat exchange with the heat transfer medium in the heat exchange step and cooled in the cooling step and a second cooling medium.

With the above method, by the compression step, the carbon dioxide gas is pressurized, thereby raising the liquefaction temperature of the carbon dioxide gas. Further, by the heat exchange step and the cooling step, the temperature of the carbon dioxide gas subjected to heat exchange in the liquefaction step is lowered in advance, allowing a relatively high temperature of the second cooling medium used for heat exchange in the liquefaction step. In this case, the size of the facility for cooling the second cooling medium can be reduced.

Additionally, with the above method, the carbon dioxide gas can be separated from the absorption solution or the adsorbent by using the thermal energy of the carbon dioxide gas compressed in the compression step as a heating source in the separation step. In this case, the exhaust heat generated in the compression step is used to reduce the load on a boiler facility for supplying the heating source in the separation step or to eliminate the boiler facility. Therefore, with the above method, it is possible to reduce the size and complexity of a facility for recovering carbon dioxide contained in the exhaust gas.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", and "have" are not intended to be exclusive of other components.

The present disclosure is not limited to the embodiments described above, but includes modifications to the embodiments described above, and embodiments composed of combinations of those embodiments.

The contents described in the above embodiments would be understood as follows, for instance.
1) A carbon dioxide recovery system (1) according to at least one embodiment of the present disclosure is a carbon dioxide recovery system (1) configured to recover carbon dioxide contained in exhaust gas discharged from a combustion device (11), comprising: a carbon dioxide extraction device (2) configured to absorb carbon dioxide contained in the exhaust gas into an absorption solution or to adsorb the carbon dioxide onto an adsorbent; a separation device (3) configured to separate carbon dioxide gas from the absorption solution or the adsorbent by heating the absorption solution or the adsorbent to which the carbon dioxide is attached in the carbon dioxide extraction device (2), the separation device (3) including a heater (4) configured to heat the absorption solution or the adsorbent by heat exchange between the absorption solution or the adsorbent and a heat transfer medium; and a liquefaction device (5) configured to liquefy the carbon dioxide gas by cooling the carbon dioxide gas separated from the absorption solution or the adsorbent in the separation device (3). The liquefaction device (5) includes: at least one compressor (6) configured to compress the carbon dioxide gas separated from the absorption solution or the adsorbent in the separation device (3); at least one heat exchanger (7) configured to perform heat exchange between the heat transfer medium to be introduced into the heater (4) and the carbon dioxide gas compressed in the at least one compressor (6); at least one cooler (8) configured to cool the carbon dioxide gas by heat exchange between the carbon dioxide gas compressed in the at least one compressor (6) and a first cooling medium; and a liquefier (9) configured to liquefy the carbon dioxide gas by heat exchange between the carbon dioxide gas that has passed through the at least one heat exchanger (7) and the at least one cooler (8) and a second cooling medium.

With the above configuration 1), the at least one compressor (6) pressurizes the carbon dioxide gas, thereby raising the liquefaction temperature of the carbon dioxide gas. Further, the at least one heat exchanger (7) and the at least one cooler (8) lower the temperature of the carbon dioxide gas introduced into the liquefier (9) in advance, allowing a relatively high temperature of the second cooling medium used for heat exchange in the liquefier (9). In this case, the size of a facility for cooling the second cooling medium can be reduced.

Additionally, with the above configuration 1), the carbon dioxide gas can be separated from the absorption solution or the adsorbent by using the thermal energy of the carbon dioxide gas compressed in the at least one compressor (6) as a heating source in the separation device (3). In this case, the exhaust heat from the compressor (6) is used to reduce the load on a boiler facility for supplying the heating source to the separation device (3) or to eliminate the boiler facility. Therefore, with the above configuration 1), it is possible to reduce the size and complexity of the carbon dioxide recovery system (1), which is a facility for recovering carbon dioxide contained in the exhaust gas.

2) In some embodiments, in the carbon dioxide recovery system (1) described in 1), the liquefaction device (5) further includes a carbon dioxide gas line (12) for sending the carbon dioxide gas separated from the absorption solution or the adsorbent in the separation device (3) to the liquefier (9), the carbon dioxide gas line (12) being equipped with the at least one compressor (6), the at least one heat exchanger (7), and the at least one cooler (8). The at least one compressor (6) includes: a first compressor (6A); and a second compressor (6B) disposed downstream of the first compressor (6A) on the carbon dioxide gas line.

With the above configuration 2), by providing a multi-stage compressor (6A, 6B) on the carbon dioxide gas line (12), the output of the compressors (6A, 6B) that make up each stage can be reduced, so that the size of the compressors (6A, 6B) that make up each stage can be reduced.

3) In some embodiments, in the carbon dioxide recovery system (1) described in 2), the at least one heat exchanger (7) includes: a first heat exchanger (7A) disposed between the first compressor (6A) and the second compressor (6B) on the carbon dioxide gas line (12); and a second heat exchanger (7B) disposed downstream of the second compressor (6B) on the carbon dioxide gas line (12).

With the above configuration 3), the first heat exchanger (7A) allows the thermal energy of the carbon dioxide gas compressed in the first compressor (6A) to be supplied to the separation device (3) as a heating source. Further, the second heat exchanger (7B) allows the thermal energy of the carbon dioxide gas compressed in the second compressor (6B) to be supplied to the separation device (3) as a heating source. In this case, the exhaust heat from the compressors (6A, 6B), which make up each stage of the multi-stage compressor, can be effectively used as a heating source for the separation device (3).

4) In some embodiments, the carbon dioxide recovery system (1) described in any one of 1) to 3) further comprises a pre-heater (10B, 10C) configured to heat the carbon dioxide gas to be introduced into the at least one compressor (6) by heat exchange between the carbon dioxide gas and a first heating medium.

With the above configuration 4), the at least one pre-heater (10B, 10C) heats the carbon dioxide gas to be introduced into the at least one compressor (6), thereby increasing the amount of heat supplied to the separation device (3) via the at least one heat exchanger (7).

5) In some embodiments, in the carbon dioxide recovery system (1) described in any one of 1) to 4), the carbon dioxide extraction device (2) is configured to absorb the carbon dioxide contained in the exhaust gas into the absorption solution.

With the above configuration 5), carbon dioxide absorbed in the absorption solution in the carbon dioxide extraction device (2) can be separated from the absorption solution by the separation device (3), and the carbon dioxide gas separated from the absorption solution can be liquefied by the liquefaction device (5).

6) In some embodiments, in the carbon dioxide recovery system (1) described in any one of 1) to 4), the carbon dioxide extraction device (2) is configured to adsorb the carbon dioxide contained in the exhaust gas onto the adsorbent.

With the above configuration 6), carbon dioxide adsorbed on the adsorbent in the carbon dioxide extraction device (2) can be separated from the adsorbent by the separation device (3), and the carbon dioxide gas separated from the adsorbent can be liquefied by the liquefaction device (5).

7) A carbon dioxide recovery method according to at least one embodiment of the present disclosure is a carbon dioxide recovery method for recovering carbon dioxide contained in exhaust gas discharged from a combustion device (11), comprising: a carbon dioxide extraction step of absorbing carbon dioxide contained in the exhaust gas into an absorption solution or adsorbing the carbon dioxide onto an adsorbent; a separation step of separating carbon dioxide gas from the absorption solution or the adsorbent by heating the absorption solution or the adsorbent by heat exchange between the absorption solution or the adsorbent and a heat transfer medium; and a liquefaction step of liquefying the carbon dioxide gas by cooling the carbon dioxide gas separated from the absorption solution or the adsorbent in the separation step. The liquefaction step includes: a compression step of compressing the carbon dioxide gas separated from the absorption solution or the adsorbent in the separation step; a heat exchange step of performing heat exchange between the heat transfer medium before the heat exchange in the separation step and the carbon dioxide gas compressed in the compression step; a cooling step of cooling the carbon dioxide gas by heat exchange between the carbon dioxide gas compressed in the compression step and a first cooling medium; and a liquefaction step of liquefying the carbon dioxide gas by heat exchange between the carbon dioxide gas subjected to the heat exchange with the heat transfer medium in the heat exchange step and cooled in the cooling step and a second cooling medium.

With the above method 7), by the compression step, the carbon dioxide gas is pressurized, thereby raising the liquefaction temperature of the carbon dioxide gas. Further, by the heat exchange step and the cooling step, the temperature of the carbon dioxide gas subjected to heat exchange in the liquefaction step is lowered in advance, allowing a relatively high temperature of the second cooling medium used for heat exchange in the liquefaction step. In this case, the size of a facility for cooling the second cooling medium can be reduced.

Additionally, with the above method 7), the carbon dioxide gas can be separated from the absorption solution or the adsorbent by using the thermal energy of the carbon dioxide gas compressed in the compression step as a heating source in the separation step. In this case, the exhaust heat generated in the compression step is used to reduce the load on a boiler facility for supplying the heating source in the separation step or to eliminate the boiler facility. Therefore, with the above method 7), it is possible to reduce the size and complexity of a facility for recovering carbon dioxide contained in the exhaust gas.

### Reference Signs List

1 Carbon dioxide recovery system
2 Carbon dioxide extraction device
3 Separation device
4 Heater
5 Liquefaction device
6, 6A, 6B Compressor
7, 7A, 7B Heat exchanger
8, 8A, 8B Cooler
9 Liquefier
10A Pre-cooler
10B, 10C Pre-heater
11 Combustion device
12 Carbon dioxide gas line
12A to 12G Pipe
13 Storage tank
14 Liquid carbon dioxide line
15 Supply source
21 Absorption tower
22 Cooling tower
23 Cooling water circulation line
24 Cooling water cooler
25 Regeneration tower
26 Regeneration tower body
27 Absorption solution circulation line
41 Heat exchanger
42 Heat transfer medium introduction line
43 Heat transfer medium return line
44 Heat transfer medium supply line

## Claims

1. A carbon dioxide recovery system configured to recover carbon dioxide contained in exhaust gas discharged from a combustion device, comprising:
a carbon dioxide extraction device configured to absorb carbon dioxide contained in the exhaust gas into an absorption solution or to adsorb the carbon dioxide onto an adsorbent;
a separation device configured to separate carbon dioxide gas from the absorption solution or the adsorbent by heating the absorption solution or the adsorbent to which the carbon dioxide is attached in the carbon dioxide extraction device, the separation device including a heater configured to heat the absorption solution or the adsorbent by heat exchange between the absorption solution or the adsorbent and a heat transfer medium; and
a liquefaction device configured to liquefy the carbon dioxide gas by cooling the carbon dioxide gas separated from the absorption solution or the adsorbent in the separation device,
wherein the liquefaction device includes:
at least one compressor configured to compress the carbon dioxide gas separated from the absorption solution or the adsorbent in the separation device;
at least one heat exchanger configured to perform heat exchange between the heat transfer medium to be introduced into the heater and the carbon dioxide gas compressed in the at least one compressor;
at least one cooler configured to cool the carbon dioxide gas by heat exchange between the carbon dioxide gas compressed in the at least one compressor and a first cooling medium; and
a liquefier configured to liquefy the carbon dioxide gas by heat exchange between the carbon dioxide gas that has passed through the at least one heat exchanger and the at least one cooler and a second cooling medium.

2. The carbon dioxide recovery system according to claim 1,
wherein the liquefaction device further includes a carbon dioxide gas line for sending the carbon dioxide gas separated from the absorption solution or the adsorbent in the separation device to the liquefier, the carbon dioxide gas line being equipped with the at least one compressor, the at least one heat exchanger, and the at least one cooler, and
wherein the at least one compressor includes:
a first compressor; and
a second compressor disposed downstream of the first compressor on the carbon dioxide gas line.

3. The carbon dioxide recovery system according to claim 2,
wherein the at least one heat exchanger includes:
a first heat exchanger disposed between the first compressor and the second compressor on the carbon dioxide gas line; and
a second heat exchanger disposed downstream of the second compressor on the carbon dioxide gas line.

4. The carbon dioxide recovery system according to any one of claims 1 to 3, further comprising a pre-heater configured to heat the carbon dioxide gas to be introduced into the at least one compressor by heat exchange between the carbon dioxide gas and a first heating medium.

5. The carbon dioxide recovery system according to any one of claims 1 to 3,
wherein the carbon dioxide extraction device is configured to absorb the carbon dioxide contained in the exhaust gas into the absorption solution.

6. The carbon dioxide recovery system according to any one of claims 1 to 3,
wherein the carbon dioxide extraction device is configured to adsorb the carbon dioxide contained in the exhaust gas onto the adsorbent.

7. A carbon dioxide recovery method for recovering carbon dioxide contained in exhaust gas discharged from a combustion device, comprising:
a carbon dioxide extraction step of absorbing carbon dioxide contained in the exhaust gas into an absorption solution or adsorbing the carbon dioxide onto an adsorbent;
a separation step of separating carbon dioxide gas from the absorption solution or the adsorbent by heating the absorption solution or the adsorbent by heat exchange between the absorption solution or the adsorbent and a heat transfer medium; and
a liquefaction step of liquefying the carbon dioxide gas by cooling the carbon dioxide gas separated from the absorption solution or the adsorbent in the separation step,
wherein the liquefaction step includes:
a compression step of compressing the carbon dioxide gas separated from the absorption solution or the adsorbent in the separation step;
a heat exchange step of performing heat exchange between the heat transfer medium before the heat exchange in the separation step and the carbon dioxide gas compressed in the compression step;
a cooling step of cooling the carbon dioxide gas by heat exchange between the carbon dioxide gas compressed in the compression step and a first cooling medium; and
a liquefaction step of liquefying the carbon dioxide gas by heat exchange between the carbon dioxide gas subjected to the heat exchange with the heat transfer medium in the heat exchange step and cooled in the cooling step and a second cooling medium.
